# EUROPÄISCHE PATENTANMELDUNG

(11) **EP 4 404 434 A1**
(43) Veröffentlichungstag der Anmeldung: **24.07.2024**
(21) Anmeldenummer: 24150463.8
(22) Anmeldetag: 05.01.2024
(51) Int. Cl.: H02K 1/32, H02K 9/19

(54) **ELEKTRISCHE MASCHINE**

(30) Priorität: 17.01.2023 DE 102023200316
(71) Anmelder: Volkswagen Aktiengesellschaft, 38440 Wolfsburg (DE)
(72) Erfinder: Petrzik, Gunther, 52070 Aachen (DE)

(57) **Zusammenfassung**

Um eine elektrische Maschine mit einer Rotorhohlwelle bereitzustellen, welche einen erhöhten Durchfluss eines Kühlfluids ermöglicht und bei welcher Leckageverluste reduziert sind, wird eine elektrische Maschine (100) umfassend ein Gehäuse (10), einen Stator (11) und einen Rotor (12) vorgeschlagen, wobei der Rotor (12) eine Rotorhohlwelle (13) mit einem Innenraum (15) umfasst, wobei im Innenraum (15) ein drehfest mit der Rotorhohlwelle (13) angeordnetes Rohr (16) angeordnet ist, wobei die Rotorhohlwelle (13) einen Einlass (17) aufweist, durch den dem Rohr (16) ein Kühlfluid zugeführt werden kann, wobei das Rohr (16) mindestens eine Auslassöffnung (18, 18a, 18b) aufweist, durch die ein dem Rohr (16) zugeführtes Kühlfluid in den Innenraum (15) der Rotorhohlwelle (13) geleitet werden kann, wobei eine Zuführvorrichtung (19) vorgesehen ist, mit welcher ein Kühlfluid dem Einlass (17) der Rotorhohlwelle (13) zugeführt werden kann, wobei vorgesehen ist, dass die Zuführvorrichtung (19) ein gehäusefest angeordneter Strahlapparat (20) ist.

## Beschreibung

Die vorliegende Erfindung betrifft eine elektrische Maschine umfassend ein Gehäuse, einen Stator und einen Rotor, wobei der Rotor eine Rotorhohlwelle mit einem Innenraum umfasst, wobei im Innenraum ein drehfest mit der Rotorhohlwelle verbundenes Rohr angeordnet ist, wobei die Rotorhohlwelle einen Einlass aufweist, durch den dem Rohr ein Kühlfluid zugeführt werden kann, wobei das Rohr mindestens eine Auslassöffnung aufweist, durch die ein dem Rohr zugeführtes Kühlfluid in den Innenraum der Rotorhohlwelle geleitet werden kann, wobei eine Zuführvorrichtung vorgesehen ist, mit welcher ein Kühlfluid dem Einlass der Rotorhohlwelle zugeführt werden kann.

Im Stand der Technik sind elektrische Maschinen mit einer Rotorinnenkühlung bekannt. Dabei wird einem Innenraum einer Rotorhohlwelle axial ein Kühlfluid zugeführt, welches dann aufgrund der Rotation der Rotorhohlwelle durch in der Rotorhohlwelle vorgesehene radiale Auslassöffnungen in Innenkanäle des Blechpakets des Rotors strömt. Da das Kühlfluid nur von einer axialen Seite in die Rotorhohlwelle eingeleitet wird, kann es zu einer unsymmetrischen Ölverteilung an den meist an den gegenüberliegenden Enden der Rotorhohlwelle angeordneten Auslässen der Rotorhohlwelle führen.

Die Zuführung des Kühlfluids in die Rotorhohlwelle erfolgt meist mittels einer Zuführleitung, welche in die Rotorhohlwelle hineinragt. Da sich die Rotorhohlwelle im Betrieb um die Zuführleitung dreht, ist zwischen der Rotorhohlwelle und der Zuführleitung ein Spalt vorgesehen. Hier tritt das Problem auf, dass es bei steigendem Innendruck in der Rotorhohlwelle zu einer Leckage am Spalt kommen kann. Die Leckage am Spalt kann mit zunehmender Drehzahl steigen, insbesondere wenn in der Rotorhohlwelle Einbauteile vorgesehen sind, die deren Innendurchmesser reduzieren. Im Spalt auftretende Scherströmungen erzeugen zudem ein nachteiliges Schleppmoment.

Die DE 10 2018 101 641 B3 offenbart ein Verfahren zur Kühlung der Rotorhohlwelle eines Elektromotors, wobei ein Kühlflüssigkeitstransport von wirkenden Fliehkräften bewirkt wird, und wobei auf eine Abdichtung zwischen statischen und rotierenden Teilen der Kühlung verzichtet werden kann.

Die DE 10 2016 215 423 A1 offenbart eine elektrische Maschine mit einem Rotor, der eine Hohlwelle, die in ihrem Inneren einen sich in Axialrichtung erstreckenden Hohlwellenaxialkanal begrenzt, in den im Betrieb der elektrische Maschine ein Kühlfluid einströmbar ist, umfasst. Radial außen an der Hohlwelle ist ein Rotorblechpaket angebracht, das zwei axiale Stirnseiten aufweist und einen von dem Rotorblechpaket begrenzten, sich in Axialrichtung von der einen der beiden Stirnseiten des Rotorblechpakets zu der anderen der beiden Stirnseiten des Rotorblechpakets erstreckenden Axialkanal aufweist, der fluidleitend mit dem Hohlwellenaxialkanal verbunden ist, sodass im Betrieb der elektrischen Maschine das Kühlfluid von dem Hohlwellenaxialkanal via dem Axialkanal in die Stirnseiten strömbar ist und durch Fliehkraft stromab des Axialkanals nach radial außen strömbar ist.

Die DE 10 2014 107 845 A1 offenbart eine Rotorhohlwelle für einen Rotor einer elektrischen Maschine, aufweisend einen beidseitig von Stirnflanschen abgeschlossenen Zylindermantel, der einen Wellenhohlraum umgibt, wobei an den Stirnflanschen jeweils ein Wellenzapfen ausgebildet ist, und wobei in einem der Wellenzapfen ein Einlass vorgesehen ist, über den eine Kühlflüssigkeit in den Wellenhohlraum und an die Innenfläche des Zylindermantels gelangt. Die Rotorhohlwelle weist ein im Wellenhohlraum angeordnetes Verteilelement auf, das die über den Einlass eintretende Kühlflüssigkeit aufnimmt, über eine rotationsymmetrische Ableitfläche in Richtung der Innenfläche des Zylindermantels führt und über einen Mündungsbereich auf die Innenfläche abgibt.

Aus der DE 10 2020 208 518 A1 ist eine Wellenkühlung bekannt. Bei der Wellenkühlung wird ein Innenvolumen einer als Hohlwelle ausgestalteten Welle axial endseitig durch eine Endkappe begrenzt, welche zumindest bereichsweise als ein Pumpenläufer geformt ist und Einlasskanäle zum Einleiten eines Kühlmittels in das Innenvolumen der Welle aufweist.

Der vorliegenden Erfindung liegt die Aufgabe zugrunde, eine elektrische Maschine mit einer Rotorhohlwelle bereitzustellen, welche einen erhöhten Durchfluss eines Kühlfluids ermöglicht und bei welcher Leckageverluste reduziert sind.

Zur Lösung der der Erfindung zugrundeliegenden Aufgabe wird eine elektrische Maschine umfassend ein Gehäuse, einen Stator und einen Rotor vorgeschlagen, wobei der Rotor eine Rotorhohlwelle mit einem Innenraum umfasst, wobei im Innenraum ein drehfest mit der Rotorhohlwelle verbundenes Rohr angeordnet ist, wobei die Rotorhohlwelle einen Einlass aufweist, durch den dem Rohr ein Kühlfluid zugeführt werden kann, wobei das Rohr mindestens eine Auslassöffnung aufweist, durch die ein dem Rohr zugeführtes Kühlfluid in den Innenraum der Rotorhohlwelle geleitet werden kann, und wobei eine Zuführvorrichtung vorgesehen ist, mit welcher ein Kühlfluid dem Einlass der Rotorhohlwelle zugeführt werden kann, wobei ferner vorgesehen ist, dass die Zuführvorrichtung ein gehäusefest angeordneter Strahlapparat ist.

Der Stator und der Rotor sind im Inneren des Gehäuses der elektrischen Maschine angeordnet. Der Rotor weist bevorzugt ein Blechpaket auf, welches drehfest mit der Rotorhohlwelle verbunden ist. Im Rotorblechpaket können Innenkanäle für eine Rotorinnenkühlung vorgesehen sein. Die Rotorhohlwelle kann zudem, bevorzugt im Bereich ihrer axialen Enden, Auslässe aufweisen, durch die ein dem Innenraum der Rotorhohlwelle zugeführtes Kühlfluid aus der Rotorhohlwelle austreten und in die Innenkanäle des Rotorblechpaketes eintreten kann.

Die Rotorhohlwelle weist an zumindest einer axialen Endseite einen Einlass auf, durch den dem in der Rotorhohlwelle drehfest angeordneten Rohr ein Kühlfluid zugeführt werden kann. Mit anderen Worten kann ein Kühlfluid durch den Einlass der Rotorhohlwelle zugeführt werden, sodass es in das in der Rotorhohlwelle drehfest angeordnete Rohr einströmt. Das in der Rotorhohlwelle angeordnete Rohr kann dabei auch im Bereich des Einlasses angeordnet sein, und aus dem Einlass aus der Rotorhohlwelle hinausragen. Wenn dem Rohr durch den Einlass der Rotorhohlwelle ein Kühlfluid zugeführt wird, so wird dieses durch die Auslassöffnungen des Rohres in den Innenraum der Rotorhohlwelle geleitet und kann anschließend durch die Auslässe in die Innenkanäle des Rotorblechpaketes strömen. Bei dem Kühlfluid kann es sich insbesondere um ein Kühlöl handeln.

Erfindungsgemäß ist vorgesehen, dass die Zuführvorrichtung ein gehäusefest angeordneter Strahlapparat ist.

Im Gegensatz zu aus dem Stand der Technik bekannten elektrischen Maschinen ist die Zuführvorrichtung nicht als einfache Zuführleitung sondern als Strahlapparat ausgebildet. Durch die Verwendung eines Strahlapparates ist eine Durchflussverstärkung für ein Kühlfluid um einen Faktor von zwei bis drei erreichbar.

Bevorzugt ist vorgesehen, dass die Rotorhohlwelle eine Rotationsachse aufweist, und dass das Rohr und/oder der Strahlapparat entlang der Rotationsachse ausgerichtet sind.

Die bevorzugt im Wesentlichen rotationssymmetrisch ausgebildete Rotorhohlwelle weist eine Rotationsachse auf, um die diese im Betrieb mitsamt dem Blechpaket rotiert. Auch das Rohr und der Strahlapparat können im Wesentlichen rotationssymmetrisch ausgebildet sein. Durch die Anordnung des Rohres und/oder des Strahlapparates entlang der Rotationsachse wird eine symmetrische Kühlfluidzuführung ermöglicht.

Bevorzugt ist vorgesehen, dass der Strahlapparat eine äußere Düse für einen ersten Kühlfluidstrom und eine in der äußeren Düse angeordnete innere Düse für einen zweiten Kühlfluidstrom aufweist.

Es werden dem Rohr somit durch die als Strahlapparat ausgebildete Zuführvorrichtung und durch den Einlass der Rotorhohlwelle zwei Kühlfluidströme zugeführt, wobei ein erster Kühlfluidstrom durch die äußere Düse und ein zweiter Kühlfluidstrom durch die im Inneren der äußeren Düse angeordnete innere Düse zugeführt wird. Die innere Düse ist bevorzugt konzentrisch im Inneren der äußeren Düse angeordnet.

Dabei ist bevorzugt vorgesehen, dass der erste Kühlfluidstrom ein Treibstrom ist, und dass der zweite Kühlfluidstrom ein Saugstrom ist.

Der bevorzugt durch die äußere Düse geführte Treibstrom erzeugt dabei infolge von Impulsaustausch ein Unterdruckgebiet in dem Rohr für den, bevorzugt durch die innere Düse zugeführten, Saugstrom. Dieses Unterdruckgebiet fördert den Saugstrom, sodass eine Durchflussverstärkung um einen Faktor von zwei bis drei erreichbar ist. Grundsätzlich ist es auch möglich, dass der erste Kühlfluidstrom der Saugstrom ist und dass der zweite Kühlfluidstrom der Treibstrom ist.

Bevorzugt ist vorgesehen, dass die elektrische Maschine eine Pumpe zur Erzeugung des Treibstroms aufweist.

Mit weiterem Vorteil kann vorgesehen sein, dass der Treibstrom von einem Kühlfluidsumpf gespeist wird, und/oder dass der Saugstrom von einem zweiten Kühlfluidsumpf oder einem Kühlfluidbehälter, insbesondere einem Kühlfluidhochbehälter, gespeist wird.

Somit ist besonders bevorzugt vorgesehen, dass der Treibstrom von einem Kühlfluidsumpf gespeist wird, wobei zur Erzeugung des Treibstroms eine Pumpe vorgesehen sein kann, mittels welcher ein Kühlfluid aus dem Kühlfluidsumpf gefördert werden kann. Der Saugstrom kann entweder aus einem zweiten Kühlfluidsumpf oder aus einem Kühlfluidbehälter gespeist werden. Dabei kann es sich insbesondere um einen Kühlfluidhochbehälter handeln, das heißt, dass der Kühlfluidbehälter bevorzugt oberhalb der Rotationsachse der Rotorwelle angeordnet ist. Insbesondere eine Anordnung des Kühlfluidhochbehälters oberhalb der Rotationsachse ist vorteilhaft, da der Saugstrom durch die Gravitationswirkung zusätzlich verstärkt wird.

Bevorzugt ist vorgesehen, dass das Rohr einen Mischrohrabschnitt aufweist, wobei die äußere Düse und die innere Düse derart angeordnet und ausgerichtet sind, dass der erste Kühlfluidstrom und der zweite Kühlfluidstrom in den Mischrohrabschnitt geleitet werden.

Die in das Rohr eintretenden Kühlfluidströme, insbesondere der erste Kühlfluidstrom und der zweite Kühlfluidstrom, werden in dem Mischrohrabschnitt gemischt, sodass sich eine homogene, gleichmäßige Strömung des Kühlfluids innerhalb des Rohres einstellt. Es kann vorgesehen sein, dass der Strahlapparat, insbesondere die innere Düse und/oder die äußere Düse, zumindest teilweise in den Mischrohrabschnitt hineinragt.

Bevorzugt ist vorgesehen, dass das Rohr einen Endabschnitt umfasst, wobei der Endabschnitt an der dem Strahlapparat zugewandten Seite des Mischschrohrabschnitts anschließt, wobei ein Auslassbereich des Strahlapparats, insbesondere ein Auslassbereich der äußeren Düse in dem Endabschnitt, bevorzugt unter Ausbildung eines Spaltes, aufgenommen ist, wobei ein Durchmesser des Mischrohrabschnitts größer ist als ein Durchmesser des Endabschnitts, wobei bevorzugt der Auslassbereich durch den Endabschnitt in den Mischrohrabschnitt hineinragend angeordnet ist.

Der Endabschnitt des Rohres ist dabei bevorzugt jener Abschnitt, welcher im Bereich des Einlasses der Rotorhohlwelle angeordnet ist. Der Strahlapparat, insbesondere die äußere Düse, ragt durch den Endabschnitt hindurch und in den Mischrohrabschnitt hinein. Der Endabschnitt weist einen geringeren Durchmesser als der Mischrohrabschnitt auf. Diese Reduktion des Durchmessers dient dazu, die Gefahr einer Leckage durch den Spalt zu verringern. Hierbei kann zwischen dem Mischrohrabschnitt und dem Endabschnitt eine Stufe oder ähnliches vorgesehen sein.

Der Spalt zwischen der Zuführvorrichtung, insbesondere dem Strahlapparat, weiter insbesondere der äußeren Düse, und dem Endabschnitt ist dabei vorteilhafterweise so gering ausgebildet, dass die Gefahr einer Leckage weiter verringert wird. Der Endabschnitt des Rohres kann bei einer Rotation der Rotorhohlwelle berührungsfrei um den Strahlapparat beziehungsweise um die äußere Düse des Strahlapparates rotieren.

Mit weiterem Vorteil kann vorgesehen sein, dass das Rohr einen sich an der dem Strahlapparat abgewandten Seite des Mischrohrabschnitts anschließenden Verteilabschnitt aufweist, wobei der Verteilabschnitt die mindestens eine Auslassöffnung aufweist, und wobei bevorzugt ein Durchmesser des Verteilabschnitts größer ist als ein Durchmesser des Mischrohrabschnitts.

Dabei kann ferner vorgesehen sein, dass der Verteilabschnitt sich konisch zu der dem Strahlapparat abgewandten Seite erweiternd, bevorzugt in Form eines Diffusors, ausgebildet ist.

Die in dem Mischrohrabschnitt zusammengeführten ersten und zweiten Kühlfluidströme strömen anschließend durch den Verteilabschnitt ab. Die Durchmesservergrößerung des Verteilabschnitts bezüglich des Mischrohrabschnitts führt dabei zu einem Abfall des dynamischen Drucks.

Die Durchmesservergrößerung zwischen dem Verteilabschnitt und dem Mischrohrabschnitt kann dabei ebenfalls in Form einer Stufe ausgebildet sein.

Durch die Ausbildung des Verteilabschnitts in Form eines Diffusors strömt das Kühlfluid in Richtung der der Zuführvorrichtung abgewandten Seite des Rohres. Dabei prägt die Rotation des Rotors um die Rotationsachse die Strömung des Kühlfluids im Diffusor. Der Diffusor begünstigt somit die axiale Strömung des Kühlfluids in Richtung der dem Strahlapparat abgewandten Seite des Rohres und wandelt einen Teil der kinetischen Energie des Strahlapparates in hydrostatischen Druck um.

Mit weiterem Vorteil kann vorgesehen sein, dass der Verteilabschnitt axial an der dem Strahlapparat abgewandten Seite verschlossen ist, wobei die mindestens eine Auslassöffnung in einer radialen Außenwand des Verteilabschnitts angeordnet ist, wobei bevorzugt die Auslassöffnung in einem Winkel gegenüber einer Radialrichtung geneigt ausgebildet ist.

Das Kühlfluid beziehungsweise die im Mischrohrabschnitt gemischten Kühlfluidströme treten somit bevorzugt nicht axial aus dem Rohr in den Innenraum der Rotorhohlwelle aus, sondern werden radial durch Auslassöffnungen in der radialen Außenwand des Verteilabschnitts in den Innenraum der Rotorhohlwelle geleitet. Bei der Außenwand kann es sich insbesondere um die radiale Umfangswand des Verteilabschnitts handeln. Dabei ist ferner vorgesehen, dass die Auslassöffnungen in einem Winkel gegenüber einer Radialrichtung geneigt ausgebildet sind. Hierdurch kann aus den Auslassöffnungen austretendes Kühlfluid gerichtet in den Innenraum der Rotorhohlwelle einströmen, um eine symmetrische Verteilung des Kühlfluids in dem Innenraum der Rotorhohlwelle zu begünstigen.

Die Auslassöffnungen können in Form von Sägeschnitten ausgebildet sein, sodass das austretende Kühlfluid bezüglich des Rohres eine tangentiale Geschwindigkeits- oder Strömungskomponente aufweist.

Mit weiterem Vorteil ist vorgesehen, dass mindestens zwei Auslassöffnungen in der Außenwand des Verteilabschnitts angeordnet sind, wobei eine erste Auslassöffnung gegenüber der Radialrichtung in Richtung der dem Strahlapparat zugewandten Seite geneigt ausgebildet ist, und wobei eine zweite Auslassöffnung gegenüber der Radialrichtung in Richtung der dem Strahlapparat abgewandten Seite geneigt ausgebildet ist.

Die Auslässe der Rotorhohlwelle können sich ferner an den axialen Endseiten der Rotorhohlwelle befinden. Durch die geneigte Ausrichtung der beiden Auslassöffnungen kann Kühlfluid somit gezielt in Richtung der endseitig angeordneten Auslässe geleitet werden. Hierdurch wird eine symmetrische Kühlfluidverteilung innerhalb des Innenraums der Rotorhohlwelle gewährleistet.

Die dem Strahlapparat abgewandte Seite des Rohres kann dabei entweder axial mittig in der Rotorhohlwelle zwischen den Auslässen der Rotorhohlwelle angeordnet sein. Darüber hinaus ist es jedoch auch möglich, dass die dem Strahlapparat abgewandte Seite des Rohres nicht axial mittig in dem Innenraum der Rotorwelle angeordnet ist.

Hierfür kann ferner vorgesehen sein, dass an einer Innenwand der Rotorhohlwelle eine, bevorzugt doppelkonische, Verteilfläche vorgesehen ist, welche derart ausgebildet ist, dass ein aus der mindestens einen Auslassöffnung austretendes Kühlfluid zu axial gegenüberliegenden Enden der Rotorhohlwelle geleitet wird.

Die Innenwand der Rotorhohlwelle ist somit profiliert ausgebildet, sodass sich insbesondere ein Durchmesser des Innenraumes der Rotorhohlwelle in Richtung der axialen Endseiten der Rotorhohlwelle, das heißt in Richtung der Auslässe der Rotorhohlwelle, erweitert. Aus den Auslassöffnungen des Rohres austretendes Kühlfluid wird somit über die, bevorzugt doppelkonische, Verteilfläche aufgrund der Fliehkraft in der Axialrichtung zu den beiden Endseiten der Rotorhohlwelle getrieben.

Die Erfindung wird nachstehend näher anhand der beigefügten Figuren erläutert. Es zeigen:
- Fig. 1: eine elektrische Maschine mit einer Rotorhohlwelle und einem Strahlapparat, und
- Fig. 2: eine Rotorhohlwelle und ein Strahlapparat.

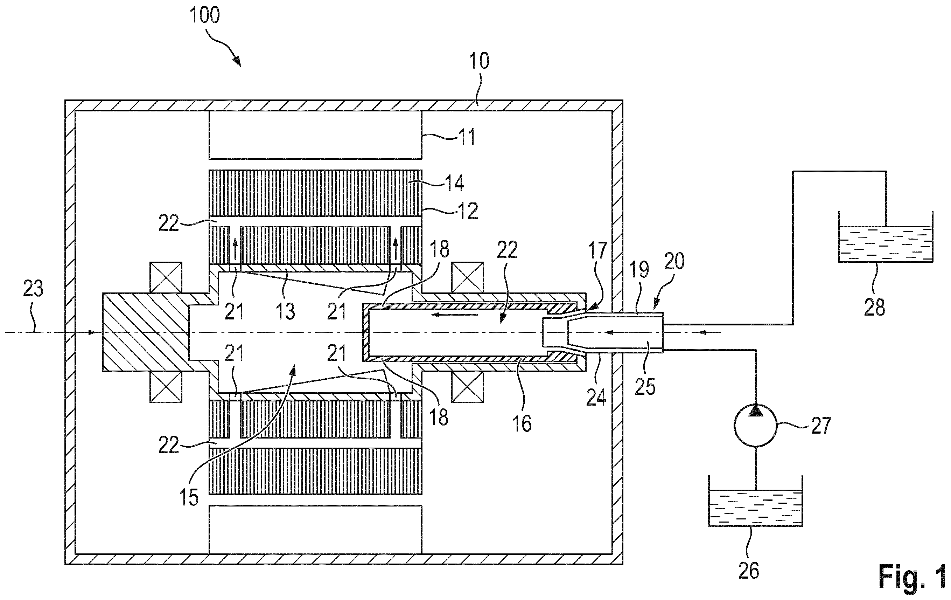

Fig. 1 zeigt in einer schematischen Schnittansicht eine elektrische Maschine 100 umfassend ein Gehäuse 10, einen Stator 11 und einen Rotor 12, wobei der Rotor 12 eine Rotorhohlwelle 13 umfasst. Die Rotorhohlwelle 13 trägt ein Rotorblechpaket 14. Die Rotorhohlwelle 13 weist einen Innenraum 15 auf, wobei im Innenraum 15 ein drehfest mit der Rotorhohlwelle 13 verbundenes Rohr 16 angeordnet ist. Die Rotorhohlwelle 13 weist einen Einlass 17 auf, durch den dem Rohr 16 ein Kühlfluid zugeführt werden kann. Das Rohr 16 weist Auslassöffnungen 18 auf, durch die ein dem Rohr 16 zugeführtes Kühlfluid in den Innenraum 15 der Rotorhohlwelle 13 geleitet werden kann. Es ist eine Zuführvorrichtung 19 vorgesehen, mit welcher ein Kühlfluid dem Einlass 17 der Rotorhohlwelle 13 zugeführt werden kann. Die Zuführvorrichtung 19 ist ein gehäusefest angeordneter Strahlapparat 20. Die Rotorhohlwelle 13 weist ferner Auslässe 21 auf, durch die ein dem Innenraum 15 der Rotorhohlwelle 13 zugeführtes Kühlfluid aus der Rotorhohlwelle 13 austreten und in Innenkanäle 22 des Rotorblechpaketes 14 zur Rotorinnenkühlung eintreten kann.

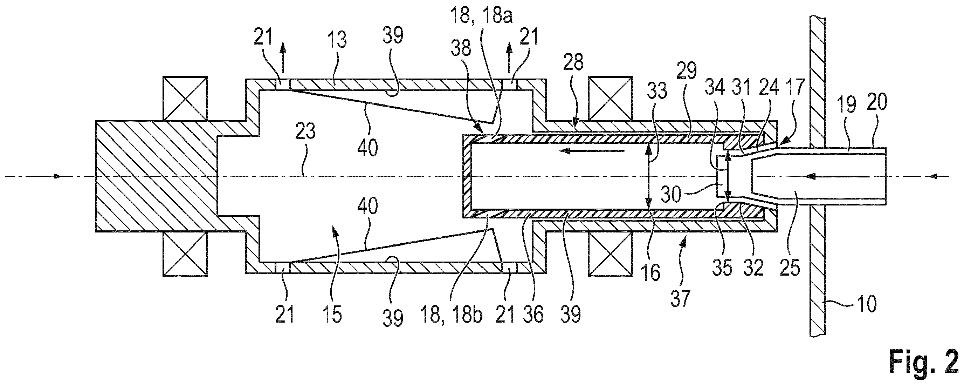

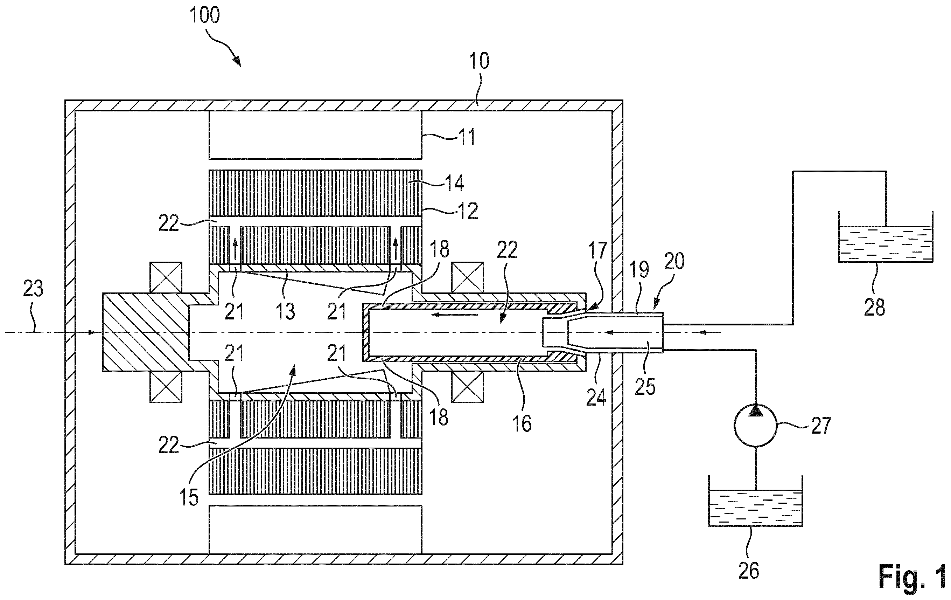

Fig. 2 zeigt ausschnittsweise die Rotorhohlwelle 13 und den Strahlapparat 20 der elektrischen Maschine 100 nach Fig. 1.

Der Strahlapparat 20 und das Rohr 16 sind entlang der Rotationsachse 23 der Rotorhohlwelle 13 ausgerichtet. Der Strahlapparat 20 weist eine äußere Düse 24 für einen ersten Kühlfluidstrom und eine in der äußeren Düse 24 konzentrisch angeordnete innere Düse 25 für einen zweiten Kühlfluidstrom auf. In der dargestellten Ausführungsform ist der erste Kühlfluidstrom ein Treibstrom und der zweite Kühlfluidstrom ist ein Saugstrom. Der Treibstrom wird, wie in Fig. 1 gezeigt, aus einem Kühlfluidsumpf 26 gespeist und mittels einer dafür vorgesehenen Pumpe 27 gefördert. Der aus der äußeren Düse 24 austretende Treibstrom erzeugt ein Unterdruckgebiet, mittels welcher der Saugstrom durch die innere Düse 25 gefördert wird. Der Saugstrom der inneren Düse 25 wird in der dargestellten Ausführungsform durch einen Kühlfluidhochbehälter 28 gespeist, welcher oberhalb der Rotationsachse 23 angeordnet ist, sodass die Gravitationswirkung eine zusätzliche Durchflusserhöhung des Kühlfluids begünstigt.

Wieder bezugnehmend auf Fig. 2 weist das Rohr 16 einen Mischrohrabschnitt 29 auf, in den der Treibstrom und der Saugstrom vom Strahlapparat 20 hineinströmen. Innerhalb des Mischrohrabschnitts 29 vermischen sich der Treibstrom und der Saugstrom, sodass eine homogene Strömung im Kühlfluid ausgebildet wird. Der Auslassbereich 30 des Strahlapparates 20, insbesondere der äußeren Düse 24, ist dabei unter Ausbildung eines Spaltes 31 in einem sich an den Mischrohrabschnitt 29 an der dem Strahlapparat zugewandten Seite 37 des Mischrohrabschnitts 29 anschließenden Endabschnitt 32 aufgenommen. Der Spalt 31 zwischen dem Strahlapparat 20 und dem Endabschnitt 32 ist dabei möglichst gering gewählt, um eine Leckage beziehungsweise Rückströmung zu vermeiden. Ferner ist vorgesehen, dass der Mischrohrabschnitt 29 einen Durchmesser 33 aufweist, welcher größer als der Durchmesser 34 des Endabschnitts 32 ist. Zwischen dem Mischrohrabschnitt 20 und dem Endabschnitt 32 ist zu diesem Zweck eine Stufe 35 ausgebildet. Der Auslassbereich 30 des Strahlapparates 20 ragt durch den Endabschnitt 32 über die Stufe 35 hinaus in den Mischrohrabschnitt 29 hinein. An den Mischrohrabschnitt 29 schließt an der dem Strahlapparat 20 abgewandten Seite 38 des Rohres 16 ein Verteilabschnitt 36 an, welcher grundsätzlich, hier jedoch nicht dargestellt, einen größeren Durchmesser als der Mischrohrabschnitt 29 aufweisen kann. Insbesondere kann der Verteilabschnitt 36 in Form eines Diffusors mit sich in Richtung der dem Strahlapparat 20 abgewandten Seite 38 vergrößerndem Durchmesser ausgebildet sein. Der Verteilabschnitt 36 ist axial an der dem Strahlenapparat 20 abgewandten Seite 38 verschlossen. Innerhalb des Rohres befindliches Kühlfluid kann durch in einer radialen Außenwand 39 des Verteilabschnitts 36 vorgesehene Auslassöffnungen 18 aus dem Rohr 16 austreten und in den Innenraum 15 der Rotorhohlwelle 13 eintreten. Die Auslassöffnungen 18 sind gegenüber der Radialrichtung geneigt ausgebildet. Ein erster Auslass 18a ist dabei in Richtung der dem Strahlapparat 20 zugewandten Seite 37 des Rohres 16 geneigt und eine zweite Auslassöffnung 18b ist in Richtung der dem Strahlapparat 20 abgewandten Seite 38 des Rohres 16 geneigt ausgebildet. Die zwei Auslassöffnungen 18a, 18b des Rohres 16 befinden sich nicht axial mittig in der Rotorhohlwelle 13. Um für eine weiter gleichmäßige Verteilung des Kühlfluids zu den Auslässen 21 der Rotorhohlwelle 13 zu sorgen, ist auf der Innenwand 39 der Rotorhohlwelle 13 eine doppelkonische Verteilfläche 40 vorgesehen. Mittels der Verteilfläche 40 kann aus den Auslassöffnungen 18a, 18b austretendes Kühlfluid gezielt in Richtung der Auslässe 21 geleitet werden. Die dafür notwendige axiale Strömung wird durch die aufgrund der Rotation in der Rotorhohlwelle auftretende Fliehkraft unterstützt.

### Bezugszeichenliste

- 100: Elektrische Maschine
- 10: Gehäuse
- 11: Stator
- 12: Rotor
- 13: Rotorhohlwelle
- 14: Rotorblechpaket
- 15: Innenraum
- 16: Rohr
- 17: Einlass
- 18: Auslassöffnung
- 18a: Auslassöffnung
- 18b: Auslassöffnung
- 19: Zuführvorrichtung
- 20: Strahlapparat
- 21: Auslass
- 22: Innenkanal
- 23: Rotationsachse
- 24: Äußere Düse
- 25: Innere Düse
- 26: Kühlfluidsumpf
- 27: Pumpe
- 28: Kühlfluidhochbehälter
- 29: Mischrohrabschnitt
- 30: Auslassbereich
- 31: Spalt
- 32: Endabschnitt
- 33: Durchmesser
- 34: Durchmesser
- 35: Stufe
- 36: Verteilabschnitt
- 37: Zugewandte Seite
- 38: Abgewandte Seite
- 39: Außenwand
- 40: Verteilfläche

## Patentansprüche

1. Elektrische Maschine (100) umfassend ein Gehäuse (10), einen Stator (11) und einen Rotor (12), wobei der Rotor (12) eine Rotorhohlwelle (13) mit einem Innenraum (15) umfasst, wobei im Innenraum (15) ein drehfest mit der Rotorhohlwelle (13) verbundenes Rohr (16) angeordnet ist, wobei die Rotorhohlwelle (13) einen Einlass (17) aufweist, durch den dem Rohr (16) ein Kühlfluid zugeführt werden kann, wobei das Rohr (16) mindestens eine Auslassöffnung (18, 18a, 18b) aufweist, durch die ein dem Rohr (16) zugeführtes Kühlfluid in den Innenraum (15) der Rotorhohlwelle (13) geleitet werden kann, wobei eine Zuführvorrichtung (19) vorgesehen ist, mit welcher ein Kühlfluid dem Einlass (17) der Rotorhohlwelle (13) zugeführt werden kann, **dadurch gekennzeichnet, dass** die Zuführvorrichtung (19) ein gehäusefest angeordneter Strahlapparat (20) ist.

2. Elektrische Maschine (100) nach Anspruch 1, **dadurch gekennzeichnet, dass** die Rotorhohlwelle (13) eine Rotationsachse (23) aufweist, und wobei das Rohr (16) und/oder der Strahlapparat (20) entlang der Rotationsachse (23) ausgerichtet sind.

3. Elektrische Maschine (100) nach Anspruch 1 oder 2, **dadurch gekennzeichnet, dass** der Strahlapparat (20) eine äußere Düse (24) für einen ersten Kühlfluidstrom und eine in der äußeren Düse (24) angeordnete innere Düse (25) für einen zweiten Kühlfluidstrom aufweist, wobei bevorzugt der erste Kühlfluidstrom ein Treibstrom ist, und wobei der zweite Kühlfluidstrom ein Saugstrom ist.

4. Elektrische Maschine (100) nach Anspruch 3, **dadurch gekennzeichnet, dass** die elektrische Maschine (100) eine Pumpe (27) zur Erzeugung des Treibstroms aufweist.

5. Elektrische Maschine (100) nach Anspruch 3 oder 4, **dadurch gekennzeichnet, dass** der Treibstrom von einem Kühlfluidsumpf (26) gespeist wird, und/oder dass der Saugstrom von einem zweiten Kühlfluidsumpf oder einem Kühlfluidbehälter, insbesondere einem Kühlfluidhochbehälter (28), gespeist wird.

6. Elektrische Maschine (100) nach einem der Ansprüche 3 bis 5, **dadurch gekennzeichnet, dass** das Rohr (16) einen Mischrohrabschnitt (29) aufweist, wobei die äußere Düse (24) und die innere Düse (25) derart angeordnet und ausgerichtet sind, dass der erste Kühlfluidstrom und der zweite Kühlfluidstrom in den Mischrohrabschnitt (29) geleitet werden.

7. Elektrische Maschine (100) nach Anspruch 6, **dadurch gekennzeichnet, dass** das Rohr (16) einen Endabschnitt (32) umfasst, wobei der Endabschnitt (32) an der dem Strahlapparat (20) zugewandten Seite (37) des Mischrohrabschnitts (29) anschließt, wobei ein Auslassbereich (30) des Strahlapparats (20), insbesondere ein Auslassbereich (30) der äußeren Düse (24) in dem Endabschnitt (32), bevorzugt unter Ausbildung eines Spaltes (31), aufgenommen ist, wobei ein Durchmesser (33) des Mischrohrabschnitts (29) größer ist als ein Durchmesser (34) des Endabschnitts (32), wobei bevorzugt der Auslassbereich (30) durch den Endabschnitt (32) in den Mischrohrabschnitt (29) hineinragend angeordnet ist.

8. Elektrische Maschine (100) nach Anspruch 6 oder 7, **dadurch gekennzeichnet, dass** das Rohr (16) einen sich an der dem Strahlapparat (20) abgewandten Seite (38) des Mischrohrabschnitts (29) anschließenden Verteilabschnitt (36) aufweist, wobei der Verteilabschnitt (36) die mindestens eine Auslassöffnung (18, 18a, 18b) aufweist, und wobei bevorzugt ein Durchmesser des Verteilabschnitts (36) größer ist als ein Durchmesser (33) des Mischrohrabschnitts (29), wobei weiter bevorzugt der Verteilabschnitt (36) sich konisch zu der dem Strahlapparat (20) abgewandten Seite (38) erweiternd, bevorzugt in Form eines Diffusors, ausgebildet ist.

9. Elektrische Maschine (100) nach Anspruch 8, **dadurch gekennzeichnet, dass** der Verteilabschnitt (36) axial an der dem Strahlapparat (20) abgewandten Seite (38) verschlossen ist, wobei die mindestens eine Auslassöffnung (18, 18a, 18b) in einer radialen Außenwand (39) des Verteilabschnitts (36) angeordnet ist, wobei bevorzugt die Auslassöffnung (18, 18a, 18b) in einem Winkel gegenüber einer Radialrichtung geneigt ausgebildet ist.

10. Elektrische Maschine (100) nach einem der vorgenannten Ansprüche, **dadurch gekennzeichnet, dass** mindestens zwei Auslassöffnungen (18, 18a, 18b) in der Außenwand (39) des Verteilabschnitts (36) angeordnet sind, wobei eine erste Auslassöffnung (18a) gegenüber der Radialrichtung in Richtung der dem Strahlapparat (20) zugewandten Seite (37) geneigt ausgebildet ist, und wobei eine zweite Auslassöffnung (18b) gegenüber der Radialrichtung in Richtung der dem Strahlapparat (20) abgewandten Seite (38) geneigt ausgebildet ist, und/oder dass an einer Innenwand (39) der Rotorhohlwelle (13) eine, bevorzugt doppelkonische, Verteilfläche (40) vorgesehen ist, welche derart ausgebildet ist, dass ein aus der mindestens einen Auslassöffnung (18, 18a, 18b) austretendes Kühlfluid zu axial gegenüberliegenden Enden der Rotorhohlwelle (13) geleitet wird.
